# EUROPÄISCHE PATENTANMELDUNG

(11) **EP 1 148 396 A1**
(43) Veröffentlichungstag der Anmeldung: **24.10.2001**
(21) Anmeldenummer: 00108719.6
(22) Anmeldetag: 22.04.2000
(51) Int. Cl.: G05B 19/042

(54) **Überwachung vernetzter Datenverarbeitungsanlagen**

(71) Anmelder: Siemens Schweiz AG, 8047 Zürich (CH)
(72) Erfinder: Rowden, Neville, 8605 Gutenswil (CH)

(57) **Zusammenfassung**

Ein Überwachungssystem von vernetzten Datenverarbeitungsanlagen (A,B,C,D,E) mit sicherheitsrelevanten Aufgaben, insbesondere in der Eisenbahntechnik, löst die Überwachungsaufgabe als Teilprozess aller Datenverarbeitungsanlagen (A,B,C,D,E). Jede Datenverarbeitungsanlage übernimmt dazu Aufgaben bei der Überwachung der anderen Datenverarbeitungsanlagen (A,B,C,D,E). Aufgrund von Zustandsinformationen (ZA,ZB,ZC,ZD,ZE), die Auskunft über lokale und globale Prozesse und Daten der einzelnen Datenverarbeitungsanlagen (A,B,C,D,E) geben, können signifikante Rückschlüsse über die einzelnen Datenverarbeitungsanlagen sowie über lokale und globale Prozesse und Daten gewonnen werden. Die Zustandsinformationen sind das Resultat von periodischen Selbstüberprüfungen (UA,UB,UC,UD,UE) der Datenverarbeitungsanlagen (A,B,C,D,E) und werden für alle Datenverarbeitungsanlagen (A,B,C,D,E) sichtbar auf das Netzwerk gegeben. Die zur Überwachung verantwortliche Datenverarbeitungsanlage kann somit aufgrund der eigenen oder der indirekten Überwachung der anderen Datenverarbeitungsanlagen Fehler an der zu überwachenden Datenverarbeitungsanlage feststellen und Massnahmen einleiten.

## Beschreibung

Die vorliegende Erfindung betrifft ein Überwachungssystem und ein Überwachungsverfahren nach dem Oberbegriff des Patentanspruchs 1 bzw. 4.

Datenverarbeitungsanlagen können zur unmittelbaren Kommunikation mit Benutzern eingesetzt werden, wie das üblich bei den am Arbeitsplatz verwendeten Datenverarbeitungsanlagen der Fall ist. Sie dienen einer Datenerfassung und Datenausgabe, sowie einer Visualisierung von Prozessen. Andere Verwendungsmöglichkeiten von Datenverarbeitungsanlagen stellen zum Beispiel ihre Einsätze als Steuerrechner, Regelungsrechner, Prozessrechner oder Datenrechner dar. Systeme bestehend aus Datenverarbeitungsanlagen mit unterschiedlichen, zum Teil sicherheitsrelevanten Aufgaben, werden insbesondere in der Eisenbahntechnik vernetzt. Diese vernetzten Systeme werden nachfolgend als Netzwerke beschrieben. Um eine hohe Verfügbarkeit dieser Netzwerke zu erhalten, werden alle relevanten Daten und Prozesse redundant abgebildet. Typische Konfiguration eines Teilsystems im Netzwerk zur Sicherstellung von relevanten Daten und Prozessen besteht aus drei Datenverarbeitungsanlagen, wovon zwei Datenverarbeitungsanlagen redundante Prozesse abbilden und eine dritte Datenverarbeitungsanlage als Ersatz zur Verfügung steht. Eine Überwachung solcher Netzwerke kann mit funktional abgesonderten speziell ausgebildeten Datenverarbeitungsanlagen durchgeführt werden.

Um über längere unbewachte Zeiträume Netzwerke betreiben zu können, haben sich Überwachungsprozesse etabliert, die von den funktional abgesonderten Datenverarbeitungsanlagen bearbeitet werden. Aufgabe der überwachenden abgesonderten Datenverarbeitungsanlagen ist das Sammeln und Bearbeiten von Zustandsinformationen der vernetzten Datenverarbeitungsanlagen. Bei Bedarf können durch die überwachenden Datenverarbeitungsanlagen Massnahmen einleitet werden.

Nachteilig ist es hierbei, dass bei einer Verbindungsstörung zwischen Überwachungseinrichtung und Netzwerk oder bei einem Ausfall der Überwachungseinrichtung, gleich das ganze Netzwerk ohne Überwachung ist.

Der vorliegenden Erfindung liegt daher die Aufgabe zugrunde, ein Überwachungssystem für vernetzte Datenverarbeitungsanlagen aufzuzeigen, so dass eine möglichst hohe Verfügbarkeit der vernetzten Datenverarbeitungsanlagen erreicht wird und damit gegen erkannte Fehler Massnahmen eingeleitet werden können.

Diese Aufgabe wird erfindungsgemäss durch das im Patentanspruch 1 resp. Patentanspruch 4 angegebenen System resp. Verfahren gelöst. Vorteilhafte Ausgestaltungen der Erfindung sind in weiteren Ansprüchen angegeben.

Durch das erfindungsgemässe System werden alle vernetzten Datenverarbeitungsanlagen in die Überwachung mit eingebunden, so dass jeder Datenverarbeitungsanlage eine andere Datenverarbeitungsanlage zur Überwachung zugeteilt ist. Die Zuteilung erfolgt bei Systemstart statisch durch vorprogrammierte Speicher, sie kann jedoch während dem Betrieb dynamisch aufgrund von Zustandsinformationen geändert werden. Es braucht somit keine zusätzlichen funktional abgesonderten Überwachungsanlagen.

Die Zuteilung der Überwachungsaufgabe kann unter den Datenverarbeitungsanlagen frei vorgenommen werden, da der Überwachungsprozess in allen Datenverarbeitungsanlagen identisch abläuft.

Das Verfahren wird in zwei Stufen, global in der Netzwerkebene und lokal in der Datenverarbeitungsanlagenebene durchgeführt.

In der ersten globalen Stufe wird von jeder Datenverarbeitungsanlage Zustandsinformationen der vernetzten Datenverarbeitungsanlagen gesammelt. Dies kann beispielsweise durch Aussenden einer allgemeinen Anfrage (Broadcast) initiiert werden. Die Datenverarbeitungsanlagen melden sich daraufhin autonom mit Ihren Zustandsinformationen unter Einhaltung eines gewählten Netzwerkprotokolls. Auf eine Initiierung, des beschriebenen Vorganges durch Aussenden einer Anfrage, kann verzichtet werden, wenn die Datenverarbeitungsanlagen unter Berücksichtigung vordefinierbarer Zeitintervalle autonom Zustandsmeldungen absetzen dürfen.
Die gesammelte Information jeder einzelnen Datenverarbeitungsanlage wird anschliessend anhand definierter Kriterien überprüft. Diese Kriterien sind zum Beispiel das Vorhandensein oder die Vollständigkeit oder der fehler freie Inhalt einer Zustandsmeldung. Ein Inhalt einer Zustandsmeldung ist nicht fehlerfrei, wenn z.B. der Inhalt selbst einen Fehler durch ein an sich korrektes Bitmuster offenbart, oder wenn die Prüfsumme des Inhaltes nicht mit den Vorgaben übereinstimmt.

In der zweiten lokalen Stufe werden alle relevanten lokalen Prozesse und Daten der eigenen Datenverarbeitungsanlage auf Korrektheit und Datenintegrität überprüft. Diese Überprüfung kann beispielsweise anhand von Prüfsummen und Datenmustern, sowie Teilergebnissen der Prozesse durchgeführt werden.

Die Ergebnisse der globalen und lokalen Überprüfungen werden wieder durch die eigene Zustandsinformation den vernetzten Datenverarbeitungsanlagen zur Verfügung gestellt.

Durch dieses Verfahren sind im Bedarfsfall lokal genaue Zustandsinformationen der vernetzten Datenverarbeitungsanlagen verfügbar.
Da alle vernetzten Datenverarbeitungsanlagen die Zustandsinformationen aller anderen Datenverarbeitungsanlagen kennen, kann ein Fehler:
1. frühzeitig selbst oder durch eine beliebige andere Datenverarbeitungsanlage erkannt werden,
2. durch weitere Datenverarbeitungsanlagen verifiziert werden,
so dass eine schrittweise Behebung des Fehlers möglich wird und somit eine erhöhte Verfügbarkeit vom System resultiert.

Ein weiterer Vorteil zeigt sich darin, dass die Massnahmen zum Korrigieren von Fehlern zu jeder Zeit an den aktuellen Systemzustand anpassbar sind, da dieser den vernetzten Datenverarbeitungsanlagen bekannt ist.

Dies kann für Funktionsübernahmen der anderen vernetzten Datenverarbeitungsanlagen verwendet werden bis die fehlerhafte Datenverarbeitungsanlage wieder funktioniert.

In der Praxis kann ein Teil der Datenverarbeitungsanlagen im Netzwerk in physikalischen und/oder funktionalen Gruppen zusammengefasst werden. In Bezug auf die Erfindung können die einzelnen Datenverarbeitungsanlagen teilweise oder vollständig durch Gruppen von Datenverarbeitungsanlagen ersetzt werden, wobei die Gruppen von Datenverarbeitungsanlagen die gleichen Aufgaben in Bezug auf die Überwachung übernehmen, wie die einzelnen Datenverarbeitungsanlagen.

Ausführungsbeispiele der Erfindung werden nachfolgend anhand der Zeichnungen näher erläutert. Dabei zeigen:
- Figur 1: den allgemeinen Aufbau von gekoppelten Datenverarbeitungsanlagen als Netzwerk,
- Figur 2: den Aufbau von gekoppelten Datenverarbeitungsanlagen, welche zur Erhöhung der Verfügbarkeit in redundanten Gruppen zusammengefasst wurden,
- Figur 3: den Teilaufbau von direkt ans Netzwerk gekoppelten Datenverarbeitungsanlagen in redundanter Ausführung und

- Figur 4: den inneren Verfahrensaufbau einer Datenverarbeitungsanlage im Zusammenhang mit einer vernetzten Datenverarbeitungsanlage.

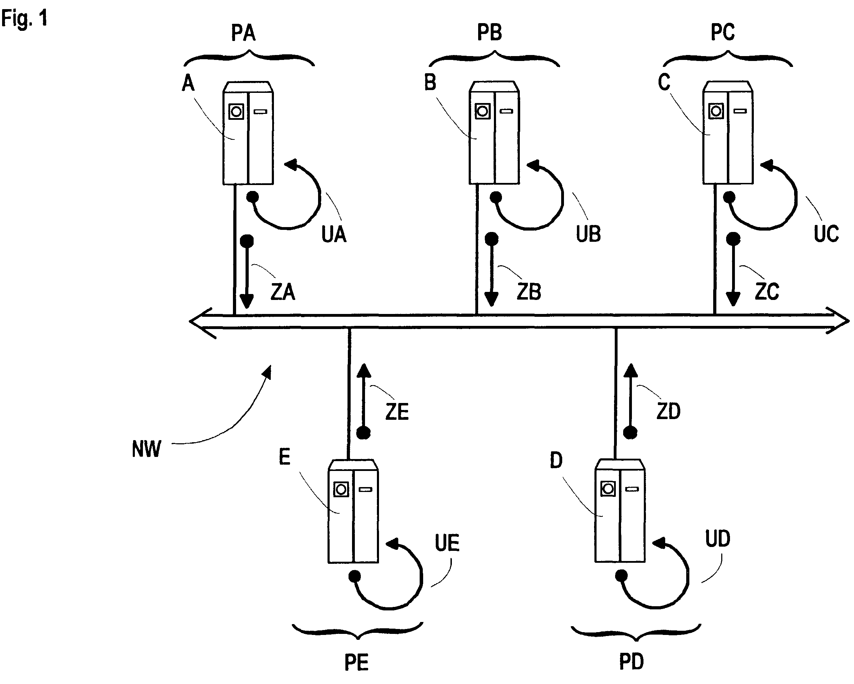

Figur 1 zeigt einen typischen Aufbau eines Netzwerkes NW mit vernetzten Datenverarbeitungsanlagen A bis E. Der Einfachheit wegen, werden in diesem Beispiel den Datenverarbeitungsanlagen A bis E Prozesse PA bis PE zugewiesen, welche in der Praxis aus vielen Prozessen und Funktionen bestehen können. Ein hier weiter zu beschreibendes Überwachungssystem sieht vor, dass sich jede einzelne Datenverarbeitungsanlage A bis E in einem ersten Schritt selbst periodisch überprüft.
Die Selbstüberprüfung UA bis UE umfasst lokale Prozesse auf Datenintegrität statisch und dynamisch sowie auf Prozesslauffähigkeit. Globale Prozessdaten, die von mehreren lokalen Prozessen verwendet werden, werden auf Datenintegrität statisch und dynamisch überprüft. Als Resultat der Selbstüberprüfung UA bis UE gehen Zustandsinformationen ZA bis ZE hervor, die noch weitere Betriebszustände beinhalten können. Die periodisch im Netzwerk NW verbreiten Zustandsinformationen ZA bis ZE können von allen vernetzten Datenverarbeitungsanlagen angefordert, respektive empfangen werden.

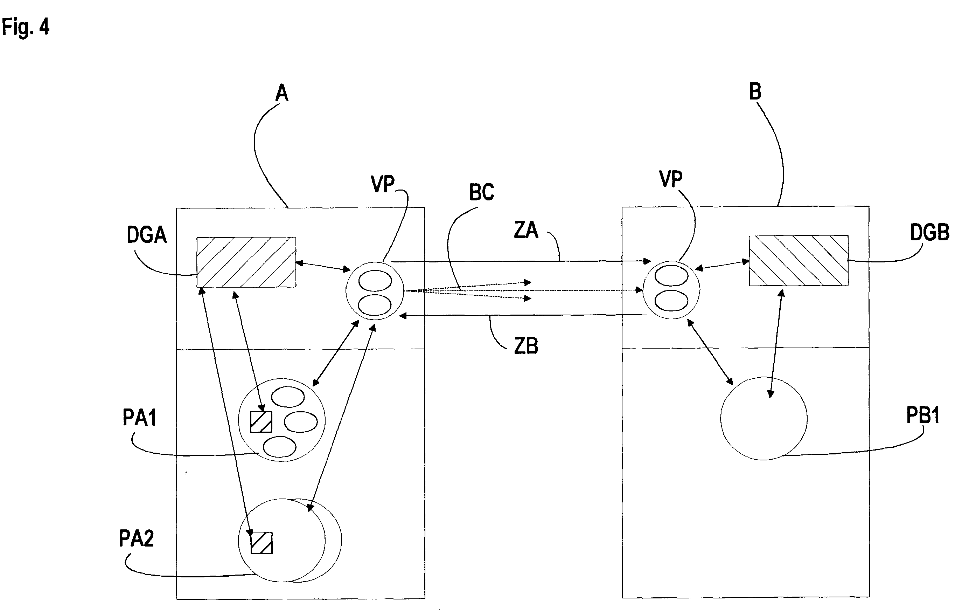

Die Figur 4 zeigt den Verfahrensablauf in der Datenverarbeitungsanlage A noch etwas genauer auf. Ein Verwaltungsprozess VP, welcher funktional in allen vernetzten Datenverarbeitungsanlagen A bis E der gleiche ist, überwacht und steuert ein auf jeder Datenverarbeitungsanlage A bis E laufendes lokales und globales Überwachungsverfahren.
Der Verwaltungsprozess VP selbst kann aus mehreren unabhängigen Prozessen bestehen. Die lokalen Prozesse PA1 und PA2 überprüfen anhand globaler Daten DGA ihre eigenen lokalen Daten. Die Prozesslauffähigkeit und die Datenintegrität wird danach dem Verwaltungsprozess VP mitgeteilt. Anhand der empfangenen Zustandsinformationen z.B. ZB können die eigenen globalen Daten DGA durch den Verwaltungsprozess überprüft werden. Zum Empfangen von Zustandsmeldungen kann eine Anfrage BC an die vernetzten Datenverarbeitungsanlagen gesendet werden, welche in bestimmbaren Zeitrastern mit Ihren Zustandsinformationen antworten müssen. In Figur 4 antwortet zum Beispiel die Datenverarbeitungsanlage B mit der ihrer Zustandsinformation ZB. Alle gesammelten Resultate der Datenverarbeitungsanlage A werden wiederum der eigenen Zustandsinformation ZA hinzugefügt.
Um die Datenverarbeitungsanlagen A bis E zu überwachen wird jeder Datenverarbeitungsanlage A bis E eine Überwachungsfunktion einer anderen Datenverarbeitungsanlage A bis E zugewiesen. So ist in Figur 1 die Datenverarbeitungsanlage B für die Überwachung der Datenverarbeitungsanlage A verantwortlich, die Datenverarbeitungsanlage C für die Überwachung der Datenverarbeitungsanlage B, die Datenverarbeitungsanlage D für Überwachung der Datenverarbeitungsanlage C und so weiter. Es wird mit Vorteil darauf geachtet, dass eine geschlossene Abhängigkeit bei der Zuweisung der Überwachungsfunktion entsteht, um keinen Unterbruch in der Überwachung im Fehlerfall zu riskieren.

Detektiert die Datenverarbeitungsanlage B einen Fehler durch die Selbstüberprüfung UB, so wird sie dies mit der Zustandsinformation ZB allen anderen Datenverarbeitungsanlagen mitteilen. Die für die Überwachung zuständige Datenverarbeitungsanlage C wird in diesem eindeutigen Fall nach erhalt der Zustandsinformation ZB die geeigneten Massnahmen ergreifen, zum Beispiel durch neu initialisieren der Datenverarbeitungseinheit B oder durch ein Verlagern des Prozesses PB im Netzwerk auf freie Kapazitäten, da diese durch die Zustandsinformationen ZA bis ZE bekannt sind oder durch andere spezifisch geeignete Massnahmen. Diese Massnahmen können in jedem Fall situativ den Fehler berücksichtigen und somit ist ein schrittweises Vorgehen möglich.

Falls durch einen Fehler eine Datenverarbeitungsanlage ihre Überwachungsfunktionen nicht mehr ausführen kann, übernimmt die Datenverarbeitungsanlage, die für diese nun ausgeschaltete Datenverarbeitungsanlage verantwortlich ist, nun die Überwachungsaufgaben der defekten Datenverarbeitungsanlage. In diesem Beispiel würde bei einem Ausfall der Datenverarbeitungsanlage B die Datenverarbeitungsanlage C die Überwachung der Datenverarbeitungsanlage A übernehmen.

Andere Möglichkeiten von direkten Fehleroffenbarungen sind unvollständig oder nicht zur rechten Zeit abgelegte Zustandsinformationen ZA bis ZE der vernetzten Datenverarbeitungsanlagen A bis E auf dem Netzwerk.

Eine weitere Ausbildung des Verfahrens erlaubt eine indirekte Offenbarung von Fehlern. Dieser Fall ergibt sich, wenn zwei nicht mit der Überwachung betraute Datenverarbeitungsanlagen der zuständigen überwachenden Datenverarbeitungsanlage einen Fehler ihrer zu überwachenden Datenverarbeitungsanlage Melden. Als Beispiel detektieren die Datenverarbeitungsanlagen A und E, dass ihre globalen Prozessdaten nicht mit den Daten der Datenverarbeitungsanlage B übereinstimmen, worauf sie diese Erkenntnis in ihren Zustandsinformationen offenbaren und somit der verantwortlichen überwachenden Datenverarbeitungsanlage C mitteilen. Aufgrund der parametrierbaren Anzahl übereinstimmenden direkten und indirekten Fehleroffenbarungen ist es für die verantwortliche überwachende Datenverarbeitungsanlage C möglich, sehr früh geeignete Massnahmen zu ergreifen, respektive einen Wiederherstellungsprozess anzustossen.

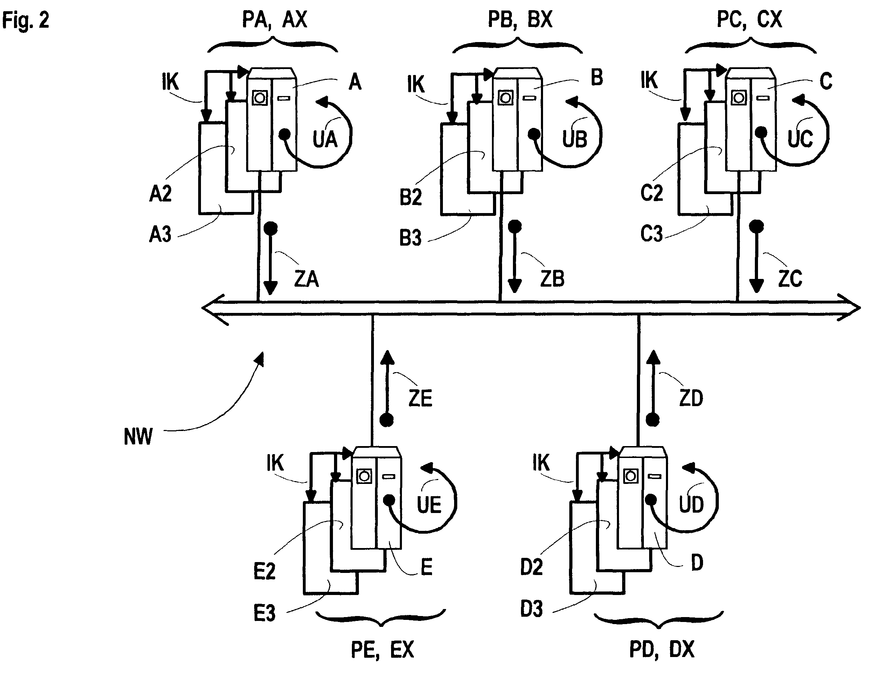

Figur 2 zeigt einen typischen Aufbau eines Netzwerkes NW mit vernetzten Datenverarbeitungsanlagen A bis E, die ihrerseits redundant aufgebaut sind, um eine erhöhte Verfügbarkeit zu erhalten. Die Gruppen AX bis EX von Datenverarbeitungsanlagen im Netzwerk NW sind als 2 von 2 System ausgebildet, zum Beispiel Datenverarbeitungsanlage A und die redundante Datenverarbeitungsanlage A2 mit einer Reservedatenverarbeitungsanlage A3. In einer solchen Konfiguration führen zwei Datenverarbeitungsanlagen A1 und A2 die gleiche Funktionalität aus und im Fehlerfall kann eine der Beiden durch die Reservedatenverarbeitungsanlage A3 ersetzt werden. Dieses Gruppen stellen an sich bereits eine erhöhte Verfügbarkeit dar, da innerhalb der Gruppen AX bis EX durch geeignete interne Kommunikation IK ein Teil von möglichen Fehlern detektierbar und behebbar ist. Zusätzlich sind jedoch durch das beschriebene Überwachungssystem weitere Prozesse und Daten verifizierbar und auch die Fehlerbehebung ist nicht auf bestimmte Datenverarbeitungsanlagen begrenzt. In Bezug auf das beschriebene Überwachungssystem für vernetzte Datenverarbeitungsanlagen übernehmen die Gruppen AX bis EX die gleiche Funktionalität wie in der Figur 1 die Datenverarbeitungsanlagen A bis E mit den Prozessen PA bis PE. Jede Gruppe AX bis EX übernimmt Überwachungsfunktionen einer anderen Gruppe AX bis EX, so dass im Fehlerfall einer Gruppe AX bis EX möglichst einfach Prozesse und Daten übertragbar sind.

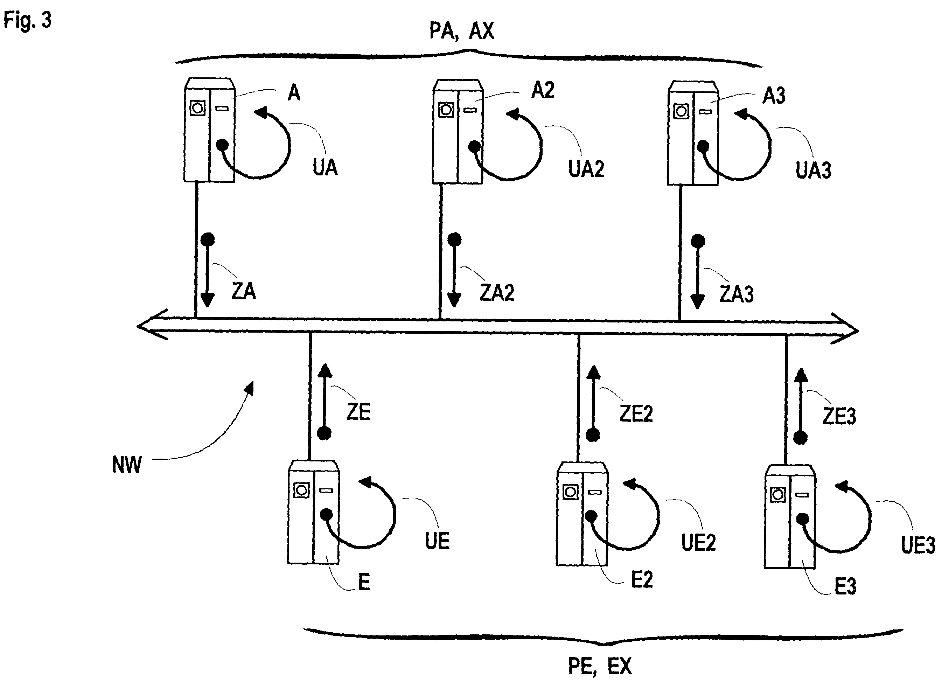

Figur 3 zeigt als Beispiel einen möglichen Netzwerkteil, in welchem die redundanten Datenverarbeitungsanlagen A2 und E2 sowie die Ersatz-Datenverarbeitungsanlagen A3 und E3 direkt mit dem Netzwerk koppelbar sind, so dass die interne Kommunikation IK gemäss Figur 2 in den Gruppen AX und EX durch das beschriebene Überwachungsverfahren für vernetzte Datenverarbeitungsanlagen ersetzbar ist.

### Liste der verwendeten Bezugszeichen

- A, B, C, D, E: Datenverarbeitungsanlage
- A2,B2,C2,D2,E2: redundante Datenverarbeitungsanlage
- A3,B3,C3,D3,E3: Ersatz-Datenverarbeitungsanlagen
- AX,BX,CX,DX,EX: Gruppen von Datenverarbeitungsanlagen im Netzwerk
- PA, PB, PC, PD, PE: Prozess einer Datenverarbeitungsanlage oder einer Gruppen von Datenverarbeitungsanlagen im Netzwerk
- UA,UB,UC,UD,UE: Selbst-Überwachung einer Datenverarbeitungsanlage
- UA2,UE2: Selbst-Überwachung einer redundanten Datenverarbeitungsanlage
- UA3,UE3: Selbst-Überwachung einer Ersatz-Datenverarbeitungsanlage
- ZA,ZB,ZC,ZD,ZE: Zustandsinformation und/oder Befundmeldung einer Datenverarbeitungsanlage
- ZA2,ZE2: Zustandsinformation und/oder Befundmeldung einer redundanten Datenverarbeitungsanlage
- ZA3,ZE3: Zustandsinformation und/oder Befundmeldung einer Ersatz-Datenverarbeitungsanlage
- IK: Interne Kommunikation in einer Gruppen von Datenverarbeitungsanlagen
- PA1, PA2, PB1: Lokaler Prozess der Datenverarbeitungsanlage A, beziehungsweise B
- DGA, DGB: Globale Daten der Datenverarbeitungsanlage A beziehungsweise B
- VP: Verwaltungsprozess
- BC: Anfrage der Zustandsmeldungen (Broadcast) an alle vernetzten Datenverarbeitungsanlagen
- NW: Netzwerk

## Patentansprüche

1. Überwachungssystem für vernetzte Datenverarbeitungsanlagen, insbesondere der Eisenbahntechnik, in dem zugewiesene Teilprozesse verarbeitbar sind,
**dadurch gekennzeichnet, dass**
jeder Datenverarbeitungsanlage wenigstens ein Teilprozess zur Überwachung mindestens einer anderen Datenverarbeitungsanlage zuordenbar ist und dass eine Zuteilung von überwachender zur überwachter Datenverarbeitungsanlage durch einen Speicher erfolgt.

2. Überwachungssystem nach Anspruch 1,
**dadurch gekennzeichnet, dass**
im Netzwerk Gruppen von Datenverarbeitungsanlagen aufgrund von physikalischen und/oder funktionalen Eigenschaften gebildet werden, die Überwachungsaufgaben für andere Datenverarbeitungsanlagen oder für andere Gruppen übernehmen können und umgekehrt.

3. Überwachungssystem nach Anspruch 1 oder 2,
**dadurch gekennzeichnet, dass**
jede Datenverarbeitungsanlage (A,B,C,D,E) oder jede Gruppe von Datenverarbeitungsanlagen (AX, BX, CX, DX, EX) über Zeitmessungen für den Anstoss von Selbstüberprüfungen, sowie über Speicher für das Ablegen von eigenen Zustandsinformationen (ZA,ZB,ZC,ZD,ZE) verfügt, so dass die Zustandsinformationen mittels Netzwerk zugänglich gemacht werden können.

4. Überwachungsverfahren für vernetzte Datenverarbeitungsanlagen, insbesondere der Eisenbahntechnik, in dem zugewiesene Teilprozesse verarbeitet werden,
**dadurch gekennzeichnet, dass**
durch jede Datenverarbeitungsanlage (A,B,C,D,E) wenigstens ein Teilprozess der Überwachung mindestens einer anderen Datenverarbeitungsanlage (A,B,C,D,E) verarbeitet wird.

5. Überwachungsverfahren nach Anspruch 4,
**dadurch gekennzeichnet, dass**
die Zuteilung von überwachender Datenverarbeitungsanlage (A,B,C,D,E) zur überwachter Datenverarbeitungsanlage (A,B,C,D,E) zunächst beim Start durch einen initialisierbaren Speicher und bei Bedarf im Betrieb durch eine dynamische Auswertung auf Grund von Zustandsinformationen
(ZA, ZB, ZC, ZD, ZE) der Datenverarbeitungsanlagen durchgeführt wird.

6. Überwachungsverfahren nach einem der Ansprüche 4 bis 5,
**dadurch gekennzeichnet, dass**
im Netzwerk Gruppen von Datenverarbeitungsanlagen (AX,BX,CX,DX,EX) aufgrund von physikalischen und/oder funktionalen Eigenschaften gebildet werden, so dass Überwachungsaufgaben für andere einzelne Datenverarbeitungsanlagen oder für andere Gruppen von Datenverarbeitungsanlagen übernommen werden und umgekehrt.

7. Überwachungsverfahren nach einem der Ansprüche 4 bis 6,
**dadurch gekennzeichnet, dass**
aufgrund von Zustandsinformationen(ZA,ZB,ZC,ZD,ZE), Aussagen über lokale Prozesse und/oder Daten und/oder über globale Prozessdatenintegrität in den einzelnen Datenverarbeitungsanlagen (A,B,C,D,E) und/oder Gruppen von Datenverarbeitungsanlagen (AX,BX,CX,DX,EX) abgeleitet werden.

8. Überwachungsverfahren nach einem der Ansprüche 4 bis 7,
**dadurch gekennzeichnet, dass**
durch minimal eine Datenverarbeitungsanlage (A,B,C,D,E) oder Gruppe von Datenverarbeitungsanlagen (AX,BX,CX,DX,EX) im Netzwerk Fehler lokalisiert werden, die durch Nicht-Einhalten von definierbaren Zeitrastern oder durch Unvollständigkeit oder durch inhaltliche Angaben offenbart werden.

9. Überwachungsverfahren nach einem der Ansprüche 4 bis 8,
**dadurch gekennzeichnet, dass**
durch die für die Überwachung zuständigen Datenverarbeitungsanlage (A,B,C,D,E) oder Gruppe von Datenverarbeitungsanlagen (AX,BX,CX,DX,EX) Fehler direkt oder indirekt durch die Zustandsinformationen (ZA,ZB,ZC,ZD,ZE) detektiert werden, so dass aufgrund parametrierbarer Anzahl übereinstimmender Fehlermeldungen Massnahmen zur Fehlerbehebung ergriffen werden.

10. Überwachungsverfahren nach einem der Ansprüche 4 bis 9,
**dadurch gekennzeichnet, dass**
eingeleitet durch die für die Überwachung zuständige Datenverarbeitungsanlage (A,B,C,D,E) oder Gruppe von Datenverarbeitungsanlagen (AX, BX, CX, DX, EX) temporär eine fehlerhafte Datenverarbeitungsanlage (A,B,C,D,E) oder fehlerhafte Gruppe von Datenverarbeitungsanlagen (AX,BX,CX,DX,EX) von betroffenen Prozessen und/oder Daten (PA,PB,PC,PD,PE) befreit werden.

11. Überwachungsverfahren nach Anspruch 10,
**dadurch gekennzeichnet, dass**
ein Wiederherstellungsprozess für eine fehlerhafte Datenverarbeitungsanlage (A,B,C,D,E) oder Gruppe von Datenverarbeitungsanlagen (AX,BX,CX,DX,EX) automatisch oder manuellen gestartet und/oder durchgeführt wird.
